# EUROPÄISCHE PATENTSCHRIFT

(11) **EP 3 451 261 B1**
(45) Veröffentlichungstag und Bekanntmachung des Hinweises auf die Patenterteilung: **27.07.2022**
(21) Anmeldenummer: 18191019.1
(22) Anmeldetag: 27.08.2018
(51) Int. Cl.: G06Q 20/20, G07F 7/08, G07G 1/00

(54) **VERFAHREN UND SYSTEM ZUM ERFASSEN VON NUTZERIDENTITÄTSDATEN FÜR EIN IDENTITÄTSKONTO AN EINEM POINT-OF-SALE**
METHOD AND SYSTEM FOR REGISTERING USER IDENTITY DATA IDENTITY FOR AN IDENTITY ACCOUNT AT A POINT OF SALE
PROCÉDÉ ET SYSTÈME DE DÉTECTION DE DONNÉES D'IDENTITÉ DE L'UTILISATEUR POUR UN COMPTE D'IDENTITÉ À UN POINT DE VENTE

(30) Priorität: 29.08.2017 DE 102017119803
(43) Veröffentlichungstag der Anmeldung: 06.03.2019
(73) Patentinhaber: Bundesdruckerei GmbH, 10969 Berlin (DE)
(72) Erfinder: Schwarz, Carsten, 10969 Berlin (DE); Nguyen, Kim, 10969 Berlin (DE)
(74) Vertreter: Bittner, Thomas L.

(56) Entgegenhaltungen:
- EP-A1- 2 770 484
- WO-A1-2017/082716
- US-A1- 2004 133 804
- US-A1- 2006 212 407
- US-A1- 2007 198 287
- US-A1- 2013 138 570
- US-A1- 2016 110 533
- "Architektur elektronischer Personalausweis und elektroni-scher Aufenthaltstitel", , 27. Mai 2011 (2011-05-27), XP055059591, Bonn, Germany Gefunden im Internet: URL:https://www.bsi.bund.de/DE/Publikation en/TechnischeRichtlinien/tr03127/tr-03127. html [gefunden am 2013-04-15]
- Icao: "Doc 9303 Machine Readable Travel Documents - Part 11: Security Mechanisms for MRTDs", , 1 January 2015 (2015-01-01), XP055651858, Quebec Retrieved from the Internet: URL:https://www.icao.int/publications/Docu ments/9303_p11_cons_en.pdf [retrieved on 2019-12-11]

## Beschreibung

Die Erfindung betrifft ein Verfahren und ein System zum Erfassen von Nutzeridentitätsdaten für ein Identitätskonto an einem Point-of-Sale.

### Hintergrund

In Verbindung mit verschiedenen Online-Dienstleistungen ist es für Nutzer häufig gefordert, diese nur in Anspruch nehmen zu können, wenn die Nutzer über ein den jeweiligen Sicherheitsanforderungen genügendes Identitätskonto bei einem Identiätsdienstleister verfügt. Das Identitätskonto ermöglicht es dem Nutzer, sich zur Inanspruchnahme einer Online-Dienstleistung, beispielsweise bei einem Vertragsabschluss oder einer Kontoeröffnung, zu identifizieren. Basierend auf dem Identitätskonto, welches der Identitätsdienstleister für den Nutzer anlegt und verschiedenen Sicherheitsniveaus entsprechend führt, kann für den Nutzer eine Online-Identitätsprüfung bei Inanspruchnahme der Online-Dienstleistung ausgeführt werden.

Das Dokument DE 10 2014 010 339 A1 betrifft ein Verfahren zum Auslesen eines Ausweisdokumentes. In dem Verfahren wird ein zum Aufbau einer gesicherten Verbindung zu einem ersten Chip des Ausweisdokumentes notwendiger Code aus dem Ausweisdokument ermittelt und in dem ersten Chip und/oder in einem zweiten Chip des Ausweisdokumentes ein Authentifizierungsschlüssel und eine Information versteckt gespeichert.

In US 2013/0138570 A wird ein Verfahren zum Erstellen eines Identitätskontos beschrieben. Ein Nutzer liest beispielsweise an einem Point-of-Sale bei der Registrierung die persönlichen Daten eines Ausweisdokuments ein, welcher mittels einer PIN oder eines Passworts gesichert sein können. Nach erfolgter Registrierung erhält der Benutzer einen Berechtigungsnachweis, insbesondere in Form einer Smartcard, welche er zusammen mit dem Ausweisdokument zur Autorisierung von Transaktionen benutzen kann.

US 2004/0133804 A1 offenbart ein biometrisches Erkennungssystem zur Erfassung von Personen. Personenbezogene Daten werden zunächst aus einer bestehenden Datenbank, einem Ausweisleser oder einem webbasierten Formular im Internet bezogen. Basierend auf den erhaltenen personenbezogenen Daten werden alle notwendigen Hintergrundprüfungen durchgeführt und die Person wird berechtigt, sich im System anzumelden.

US 2006 / 0212407 A1 offenbart ein Verfahren zur Minimierung von Betrug. Ein Steuercomputer sorgt für die Authentifizierung und/oder Transaktionsverarbeitung. Der Steuerungscomputer hat Zugriff auf Datenbanken mit Benutzer-, Händler-, Anmelde-, Transaktions-, Duplikat- und betrügerischen Aktivitätsdaten.

In US 2007 / 0198287 A1 wird ein Verfahren offenbart, mit dem ein Inhaber eines Geldautomaten oder eines anderen bereits bestehenden Kontos sich der biometrischen Datenerfassung unterziehen kann und daraufhin ein Token erhält. Das Token ist mit dem Kontoauszug, biometrischen Daten und anderen zuvor oder später gesammelten Informationen verknüpft.

US 2016 / 0110533 A1 offenbart einen Registrierungsautomat zur Erfassung personenbezogener Daten mit einem Hauptmodul und mindestens einen veränderbaren Abschnitt, der abnehmbar mit dem Hauptmodul gekoppelt ist. Das Hauptmodul beinhaltet einen Prozessor und eine oder mehrere biometrische Vorrichtungen, wie einen Fingerabdrucksensor.

In WO 2017 / 082716 A1 wird ein Verfahren zum Registrieren eines Nutzerkontos auf einem Mobilgerät mittels eines Ausweisdokuments beschrieben.

EP 2 770 484 A1 offenbart ein Lesegerät für ein Dokument mit einem Datenspeicher zur Speicherung zumindest eines Datenobjekts, wobei ein externer Lesezugriff auf das Datenobjekt die Durchführung eines kryptographischen Protokolls voraussetzt.

ICAO 9303 ist ein internationaler Standard, der Spezifikationen für maschinenlesbare Reisedokumente (MRTD) definiert, herausgegeben von der ICAO (Internationale Zivilluftfahrtorganisation). Die MRTD sind von Maschinen lesbar und enthalten menschenlesbare Informationen.

### Zusammenfassung

Aufgabe der Erfindung ist es, ein Verfahren und ein System zum Erfassen von Nutzeridentitätsdaten für ein Identitätskonto anzugeben, welches eine sichere Datenerfassung ermöglicht.

Zur Lösung sind ein Verfahren sowie ein System zum Erfassen von Nutzeridentitätsdaten für ein Identitätskonto an einem Point-of Sale nach den unabhängigen Ansprüchen 1 und 8 geschaffen. Alternative Ausgestaltungen sind Gegenstand von abhängigen Ansprüchen.

Mit Hilfe der vorgeschlagenen Technologien ist es ermöglicht, für das Identitätskonto der Person (des Nutzers) persönliche Daten auf sichere Art und Weise am Point-of-Sale zu erfassen. Dieses erfolgt für die Person so an einem bequem erreichbaren Ort. Hierbei werden die notwendigen Sicherheitsanforderungen auch am Point-of-Sale sichergestellt.

Bei dem persönlichen Identitätsdokument kann es sich zum Beispiel um einen Personalausweis oder einen Reisepass der Person handeln. Das persönliche Identitätsdokument kann bei dieser oder anderen Ausführungsformen ein Lichtbild der Person aufweisen, das am Point-of-Sale geprüft werden kann, sei es im Rahmen einer Inaugenscheinnahme und / oder einer maschinellen Prüfung, die ein maschinelles Auslesen des Lichtbilds umfasst. Der elektronische Personalausweis ist beispielsweise in der technischen Richtlinie TR-03127 beschrieben.

Das Terminal mit dem Dokumentenlesegerät ist dem Point-of-Sale zugeordnet, also einer Verkaufs- oder Einkaufsstelle, was insbesondere wenigstens das Aufstellen des Terminals an dem Point-of-Sale vor Ort umfasst. Das Terminal kann ein über eine elektronische, insbesondere auch aus der Ferne abrufbare Terminalkennung verfügen, für die der Aufstellort, also der Point-of-Sale, mittels elektronischer Informationen hinterlegt ist. So kann eine Zuordnung zwischen Terminal am Point-of-Sale und Aufstellort hinterlegt sein.

Der Zugangscode, welcher auf dem persönlichen Identitätsdokument aufgedruckt ist, kann ein beliebiger alphanummerischer Code sein. Zum Beispiel kann der Zugangscode eine sogenannte "Card Access Number" (CAN) sein, die auf einem Ausweisdokument aufgedruckt ist.

Für das passwortbasierte Authentisierungs- und Schlüsseleinigungsverfahren kann zum Beispiel das PACE-Verfahren ("Password Authenticated Connection Establishment") benutzt werden, welches beispielsweise in der technischen Richtlinie TR-03110 beschrieben ist. Beim Erstellen des Identitätskontos in der Servereinrichtung des Identitätsdienstleisters kann dem Identitätskonto ein erstes Sicherheitsniveau zugeordnet werden, und es können elektronische Informationen über das erste Sicherheitsniveau gespeichert werden. Das erste Sicherheitsniveau kann beispielsweise mittels erster Kontoparameter charakterisiert sein, zum Beispiel derart, dass das Identitätskonto für eine erste Menge von Dienstleistungsanwendungen durch die Person nutzbar ist, insbesondere Online-Anwendungen. Beispielsweise kann das erste Sicherheitsniveau die Nutzung des Identitätskontos auf online-Käufe bis zu einer maximalen Höhe eines Zahlbetrags beschränken. Auch kann das erste Sicherheitsniveau bestimmte Arten von Dienstleistungsanwendungen anzeigen, für die das Identitätskonto bei online-Anwendungen nutzbar ist. In diesem Zusammenhang kann zum Beispiel ausgeschlossen sein, dass das Identitätskonto nach dem ersten Sicherheitsniveau auch für eine Eröffnung eines Bankkontos nutzbar ist.

Als Reaktion kann auf den Eingang der ausgelesenen persönlichen Daten und der erfassten Kennung von dem Terminal in der Servereinrichtung des Identitätsdienstleisters kann dem Identitätskonto ein zweites Sicherheitsniveau zugeordnet werden, welches ein höheres Sicherheitsniveau als das erste Sicherheitsniveau ist, und es können elektronische Informationen über das zweite Sicherheitsniveau gespeichert werden. Das zweite Sicherheitsniveau kann mittels zweiter Kontoparameter bestimmt sein, die von den ersten Kontoparametern verschieden sind. Das zweite Sicherheitsniveau kann den Anwendungsbereich (Nutzbarkeit) des Identitätskontos für die Person erweitern. Zum Beispiel kann aufgrund des zweiten Sicherheitsniveaus der Person ermöglicht sein, das Identitätskonto auch für eine onlinebasierte Eröffnung eines Bankkontos zu nutzen. Alternativ oder ergänzend kann der Zahlbetrag für online-Käufe gegenüber dem beim ersten Sicherheitsniveau erlaubten Betrag erhöht sein.

Am Point-of-Sale kann das Terminal mit dem Dokumentenlesegerät mit einem Point-of-Sale-Terminal integriert ausgebildet werden. Bei dem Point-of-Sale-Terminal kann es sich beispielsweise um eine elektronische Kasse an Point of Sale handeln. Auch kann das Dokumentenlesegerät in ein Lese- oder Scangerät integriert sein, welches am Point-of-Sale zum Einlesen von Codes dient, die den Verkaufspreis von Produkten und / oder Dienstleistungen anzeigen, beispielsweise ein Laserscanner zum Scannen von Strichcodes. Alternativ kann das Terminal mit dem Dokumentenlesegerät getrennt vom Point-of-Sale-Terminal gebildet sein. So können das Point-of-Sale-Terminal und das Terminal mit dem Dokumentenlesegerät physisch getrennt in einem jeweiligen Terminal-Gehäuse angeordnet sein.

Als Dokumentenlesegerät kann ein Kartenlesegerät verwendet werden, mit dem das als Identitäts-Chipkarte ausgeführte persönliche Identitätsdokument ausgelesen wird. Bei dieser oder anderen Ausführungsformen kann das Dokumentenlesegerät eingerichtet sein, zusätzlich zum Auslesen des Speichers des Chips des persönlichen Identitätsdokuments auch den auf das persönliche Identitätsdokument aufgedruckten Zugangscode auszulesen, zum mittels optischen Scannen des aufgedruckten Zugangscodes.

Beim Übermitteln der ausgelesenen persönlichen Daten und der erfassten Kennung von dem Terminal an die Servereinrichtung des Identitätsdienstleisters kann einen Datenkommunikationsnetzwerk genutzt werden, über welches auch Point-of-Sale-Daten übermittelt werden. Alternativ können getrennte Datenübertragungskanäle genutzt werden. Point-of-Sale-Daten betreffen zum Beispiel elektronische Informationen über einen Zeitpunkt und eine Menge von verkauften Produkten am Point-of-Sale, die zentral erfasst werden. Es kann vorgesehen sein, diese Informationen über einen Datenübertragungskanal mit geringerem Sicherheitsstandard zu übertragen als die ausgelesenen persönlichen Daten und die erfasste Kennung. Zur Übertragung dieser elektronischen Informationen kann ein Datenübertragungskanal mit höherem Sicherheitsstandard verwendet werden, sodass die Übertragung dieser Daten im Vergleich zur Übertragung der Point-of-Sale-Daten weitergehend abgesichert ist.

Der auf das persönliche Identitätsdokument aufgedruckt Zugangscode kann mittels einer optischen und / oder einer elektronischen Leseeinrichtung eingelesen werden. Die elektronische Leseeinrichtung zum Einlesen des Zugangscodes, der auf dem persönlichen Identitätsdokument aufgedruckt ist, kann in das Dokumentenlesegerät integriert sein. Alternativ oder ergänzend kann eine Integration der elektronischen Leseeinrichtung in das Point-of-Sale-Terminal vorgesehen sein. Die elektronische Leseeinrichtung kann zum Beispiel einen Scanner aufweisen, um den aufgedruckten Zusatzcode einzulesen.

Die Kennung für das Identitätskonto wird als eine Kennung aus der folgenden Gruppe bereitgestellt: Strichcode und alphanumerischer Code. Die Kennung für das Identitätskonto kann von der Person, welcher das Identitätskonto und das persönliche Identitätsdokument zugeordnet sind, am Point-of-Sale auf verschiedene Art und Weise präsentiert oder bereitgestellt werden. Die unterschiedlichen Codeformen können zum Beispiel auf Papier ausgedruckt sein. Alternativ oder ergänzend kann vorgesehen sein, dass die Kennung auf der Anzeige eines Mobiltelefons oder eines Laptops dargestellt und hiervon eingelesen wird, wenn die Bereitstellung der Kennung für das Identitätskonto mittels elektronischer Daten erfolgt, zum Beispiel mit Hilfe des Übertragens einer E-Mail oder einer SMS-Nachricht. Die vorangehend in Verbindung mit dem Verfahren erläuterten Ausgestaltungen können im Zusammenhang mit dem System zum Erfassen von Nutzeridentitätsdaten für das Identitätskonto am Point-of-Sale entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische Darstellung einer Anordnung für ein System zum Erfassen von Nutzeridentitätsdaten für ein Identitätskonto an einem Point-of-Sale und
- Fig.2: eine schematische Darstellung eines Ablaufdiagramms für ein Verfahren zum Erfassen von Nutzeridentitätsdaten für ein Identitätskonto an einem Point-of-Sale.

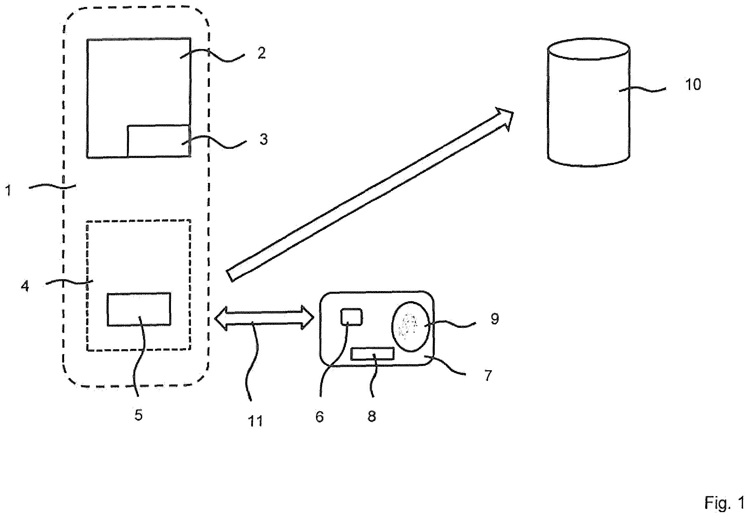

Fig. 1 zeigt eine schematische Darstellung eines Systems zum Erfassen von Nutzeridentitätsdaten für ein Identitätskonto an einem Point-of-Sale 1, insbesondere ein Online-Identitätskonto. Der Point-of-Sale 1, welcher in Fig. 1 schematisch mittels einer gestrichelten Linie gezeigt ist, ist eine Verkaufs- oder Einkaufsstelle, zum Beispiel in einem Supermarkt oder einem Einzelhandelsgeschäft. Am Point-of-Sale 1 ist eine elektronische Registrierkasse 2 vorgesehen, mit der Verkaufspreise für Waren und / oder Dienstleistungen erfasst werden können. Hierzu weist die elektronische Registrierkasse 2 bei der dargestellten Ausführungsform ein Produktlesegerät 3 auf, beispielsweise einen Laserscanner, mit dem Verkaufsartikel und -preise erfasst werden können.

Am Point-of-Sale 1 ist weiterhin ein Terminal 4 mit einem Dokumentenlesegerät 5 angeordnet. Das Dokumentenlesegerät 5 ist eingerichtet, einen elektronischen Speicher eines Chips 6 auszulesen, der in ein persönliches Identitätsdokument 7 integriert ist, welches von einer Person der das persönliche Identitätsdokument 7 zugeordnet ist, am Point-of-Sale 1 präsentiert wird. Der Speicher des Chips 6 enthält persönliche Daten der Person, die mit Hilfe des Dokumentenlesegeräts 5 kontaktlos oder kontaktbehaftet auslesbar sind.

Bei dem persönlichen Identitätsdokument 7 kann es sich beispielsweise um einen Personalausweis oder einen Reisepass handeln, insbesondere in Form einer sogenannten Chipkarte, bei der der Chip 6 in einem Plastikkartenkörper integriert ist. Bei dem Dokumentenlesegerät 5 handelt es dann zum Beispiel um einen Chipkarten-Lesegerät.

Auf das persönliche Identitätsdokument 7 ist ein Zugangscode 8 aufgedruckt, bei dem es sich um einen beliebigen alphanummerischen Code handeln kann, beispielsweise eine sogenannte "Card Access Number" (CAN). Weiterhin ist bei dem dargestellten Ausführungsbeispiel auf dem persönlichen Identitätsdokument 7 ein optionales Lichtbild 9 der Person dargestellt, welcher das persönliche Identitätsdokument 7 zugeordnet ist.

Die Anordnung in Fig. 1 sieht weiterhin eine Servereinrichtung 10 eines Identitätsdienstleisters vor, die zum Zweck des Datenaustauschs eine Online-Verbindung zum Terminal 4 mit dem Dokumentenlesegerät 5 ausbilden kann, zum Beispiel über das Internet. In der Servereinrichtung 10 werden für eine Vielzahl von Personen Online-Identitätskonten geführt, die es der jeweils einem Identitätskonto zugeordneten Person ermöglichen, das Identitätskonto für eine Online-Identitätsprüfung in Verbindung mit verschiedenen Anwendungen zu nutzen, zum Beispiel beim Eröffnen eines Bankkontos oder beim Stellen eines Online-Antrags, beispielsweise in Verbindung mit dem Eintrag in ein Melderegister, oder für einen online-Vertragsabschluss. Hierzu haben sich die Personen jeweils mit dem Identitätsdienstleister in Verbindung gesetzt, beispielsweise über eine Online-Applikation, um das persönliche Identitätskonto zu erstellen. Hierauf ist dann für die beantragende Person ein persönliches Identitätskonto bei dem Identitätsdienstleister erzeugt und bereitgestellt.

Die Person, welcher das persönliche Identitätsdokument 7 und ein Identitätskonto zugeordnet sind, kann nun am Point-of-Sale 1 die auf dem persönlichen Identitätsdokument 7 gespeicherten persönlichen Daten bereitstellen, um diese an die Servereinrichtung 10 des Identitätsdienstleisters zu übermitteln, um auf diese Weise zum Beispiel das dem Identitätskonto der Person beim Identitätsdienstleister zugeordnete Sicherheitsniveau zu erhöhen, wodurch es der Person zum Beispiel ermöglicht sein kann, die Anwendungsgebiete für die Nutzung Identitätskontos für die Online-Identitätsprüfung zu erweitern. Insbesondere kann auf diese Weise dem Identitätskonto der Person ein erhöhtes Sicherheitsniveau zugeordnet werden.

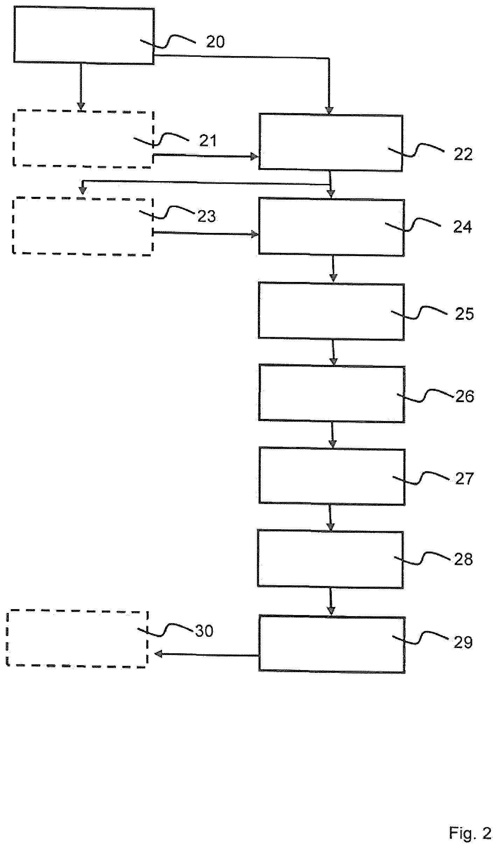

Fig. 2 zeigt eine schematische Darstellung eines Ablaufdiagramms für die Nutzung der Anordnung aus Fig. 1 in Verbindung mit einem Verfahren zum Erfassen von Nutzeridentitätsdaten für das Identitätskonto am Point-of-Sale 1. Zunächst wird im Schritt 20 das Identitätskonto für die Person in der Servereinrichtung 10 des Identitätsdienstleisters erstellt. Dieses kann auf verschiedene Art und Weise erfolgen, wie dies in unterschiedlichen Ausgestaltungen als solches bekannt ist. Im Schritt 21 wird beim Erstellten Identitätskonto ein erstes Sicherheitsniveau zugeordnet. Dieser Schritt ist optional und kann in anderen Ausführungsbeispielen entfallen. Mittels des zugeordneten ersten Sicherheitsniveaus kann beispielsweise bestimmt werden, dass das Identitätskonto in Verbindung mit Online-Käufen nur bis zu einem maximalen Kaufbetrag nutzbar ist.

Im Schritt 22 wird der Person, welcher das Identitätskonto zugeordnet ist, eine Kennung für das Identitätskonto bereitgestellt. Dieses kann beispielsweise mittels Übersenden einer elektronischen Nachricht, zum Beispiel in Form einer E-Mail oder einer SMS-Nachricht erfolgen. Die Person kann die Kennung für das Identitätskonto beispielsweise ausdrucken oder als elektronische Nachricht auf dem Mobiltelefon abrufen und darstellen.

Meldet sich die Person nun am Point-of-Sale 1 und bittet um die Übertragung von persönlichen Daten, die auf dem persönlichen Identitätsdokument 7 im Chip 6 gespeichert sind, kann das Verkaufspersonal zunächst in einem optionalen Schritt 23 das Lichtbild prüfen.

Zum Auslesen der persönlichen Daten wird zwischen dem Chip 6 des persönlichen Identitätsdokuments 7 und dem Dokumentenlesegerät 5 des Terminals 4 am Point-of-Sale eine Datenkommunikationsverbindung 11 ausgebildet (Schritt 24).

In dem Dokumentenlesegerät 5 wird der Zugangscode 8 erfasst, der auf den persönlichen Identitätsdokument 7 aufgedruckt ist (Schritt 25). Diese kann mit Hilfe einer Auslesefunktion des Dokumentenlesegeräts 5 erfolgen, zum Beispiel einem optischen Scanner. Alternativ kann das Verkaufspersonal oder die Person selbst den Zugangscode 8 über eine Eingabeeinrichtung des Dokumentenlesegeräts 5, beispielsweise eine Tatstatur, eingeben.

Sodann wird ein passwortbasiertes Authentisierungs- und Schlüsseleinigungsverfahren für das persönliche Identitätsdokument 7 und das Dokumentenlesegerät 5 ausgeführt (Schritt 26), beispielsweise das als solches bekannte PACE-Verfahren. Nach erfolgreichem Durchlaufen des Authentisierungs- und Schlüsseleinigungsverfahrens werden im Schritt 26 die persönlichen Daten mittels des Dokumentenlesegeräts 5 über die Datenkommunikationsverbindung 11 ausgelesen. Weiterhin wird die Kennung für das Identitätskonto im Terminal 4 am Point-of-Sale 1 erfasst (Schritt 27), sei es durch optisches und / oder elektronisches Einlesen oder eine Eingabe des Verkaufspersonals oder der Person am Terminal 4 am Point-of-Sale 1.

Im Schritt 28 werden die ausgelesenen persönlichen Daten und die erfasste Kennung von dem Terminal 4 an Point-of-Sale 1 an die Servereinrichtung 10 des Identitätsdienstleisters übertragen. In der Servereinrichtung 10 wird eine elektronische Zuordnung zwischen den persönlichen Daten und dem Identitätskonto gespeichert (Schritt 29), wenn die in der Servereinrichtung 10 erhaltenen Daten nach der Prüfung der ebenfalls übermittelten Kennung dem Identitätskonto der Person zugeordnet werden können.

Optional kann hierauf im Schritt 30 das dem Identitätskonto der Person zugeordnete Sicherheitsniveau auf ein höheres zweites Sicherheitsniveau aufgehoben werden, beispielsweise um den maximal für Online-Käufe zugelassenen Betrag zu erhöhen.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

### Bezugszeichenliste

- 1: Point-of-Sale
- 2: Registrierkasse
- 3: Produktlesegerät
- 4: Terminal am Point-of-Sale
- 5: Dokumentenlesegerät
- 6: Chip
- 7: persönliches identitätsdokument
- 8: aufgedruckter Zugangscode
- 9: Lichtbild
- 10: Servereinrichtung
- 20 ff.: Verfahrensschritte

## Patentansprüche

1. Verfahren zum Erfassen von Nutzeridentitätsdaten für ein Identitätskonto an einem Point-of-Sale, wobei das Verfahren die folgenden Schritte aufweist:
- Erstellen (20) eines Identitätskontos für eine Person, das für eine online-Identitätsprüfung nutzbar ist, in einer Servereinrichtung (10) eines Identitätsdienstleisters;
- Bereitstellen (22) einer Kennung für das erstellte Identitätskonto, wobei die Kennung der Person bereitgestellt wird, welcher das Identitätskonto zugeordnet ist und wobei die Kennung für das Identitätskonto als eine Kennung aus der folgenden Gruppe bereitgestellt wird: Strichcode und alphanumerischer Code;
wobei das Verfahren nach dem Erstellen (20) des Identitätskontos und dem Bereitstellen (22) der Kennung, die folgenden weiteren Schritte aufweist:
- Ausbilden (24) einer Datenkommunikationsverbindung (11) zwischen einem Chip (6) eines persönlichen Identitätsdokuments (7), welches der Person zugeordnet ist und in einem Speicher des Chips (6) persönliche Daten der Person aufweist, und einem Dokumentenlesegerät (5) eines Terminals (4) an einem Point-of-Sale (1);
- Erfassen (25) eines Zugangscodes (8), der auf dem persönlichen Identitätsdokument (7) aufgedruckt ist, im Dokumentenlesegerät (5);
- Ausführen (26) eines passwortbasierten Authentisierungs- und Schlüsseleinigungsverfahrens für das persönliche Identitätsdokument (7) und das Dokumentenlesegerät (5);
- nach erfolgreichem Durchlaufen des Authentisierungs- und Schlüsseleinigungsverfahrens, Auslesen der persönlichen Daten mittels des Dokumentenlesegeräts (5) über die Datenkommunikationsverbindung (11);
- Erfassen (27) der bereitgestellten Kennung für das erstellte Identitätskonto in dem Terminal (4) am Point-of-Sale (1);
- Übermitteln (28) der ausgelesenen persönlichen Daten und der erfassten Kennung von dem Terminal (4) am Point-of-Sale (1) an die Servereinrichtung (10) des Identitätsdienstleisters;
- in der Servereinrichtung (10) des Identitätsdienstleisters, Prüfen der übermittelten Kennung; und
- wenn die in der Servereinrichtung (10) des Identitätsdienstleisters erhaltenen persönlichen Daten nach der Prüfung der übermittelten Kennung dem Identitätskonto der Person zugeordnet werden können, Speichern (29) einer elektronischen Zuordnung zwischen den persönlichen Daten und dem Identitätskonto in der Servereinrichtung (10) des Identitätsdienstleisters.

2. Verfahren nach Anspruch 1, **dadurch gekennzeichnet, dass** beim Erstellen (20) des Identitätskontos in der Servereinrichtung (10) des Identitätsdienstleisters dem Identitätskonto ein erstes Sicherheitsniveau zugeordnet wird (21) und elektronische Informationen über das erste Sicherheitsniveau gespeichert werden.

3. Verfahren nach Anspruch 2, **dadurch gekennzeichnet, dass** als Reaktion auf den Eingang der ausgelesenen persönlichen Daten und der erfassten Kennung von dem Terminal (4) in der Servereinrichtung (10) des Identitätsdienstleisters dem Identitätskonto ein zweites Sicherheitsniveau zugeordnet wird (30), welches ein höheres Sicherheitsniveau als das erste Sicherheitsniveau ist, und elektronische Informationen über das zweite Sicherheitsniveau gespeichert werden.

4. Verfahren nach mindestens einem der vorangehenden Ansprüche, **dadurch gekennzeichnet, dass** am Point-of-Sale (1) das Terminal (4) mit dem Dokumentenlesegerät (5) mit einem Point-of-Sale-Terminal (2) integriert ausgebildet wird.

5. Verfahren nach mindestens einem der vorangehenden Ansprüche, **dadurch gekennzeichnet, dass** als Dokumentenlesegerät (5) ein Kartenlesegerät verwendet wird, mit dem das als Identitäts-Chipkarte ausgeführte persönliche Identitätsdokument (7) ausgelesen wird.

6. Verfahren nach mindestens einem der vorangehenden Ansprüche, **dadurch gekennzeichnet, dass** beim Übermitteln (28) der ausgelesenen persönlichen Daten und der erfassten Kennung von dem Terminal (4) an die Servereinrichtung (10) des Identitätsdienstleisters ein Datenkommunikationsnetzwerk genutzt wird, über welches auch Point-of-Sale-Daten übermittelt werden.

7. Verfahren nach mindestens einem der vorangehenden Ansprüche, **dadurch gekennzeichnet, dass** der auf das persönliche Identitätsdokument (7) aufgedruckte Zugangscode (8) mittels einer optischen und / oder einer elektronischen Leseeinrichtung eingelesen wird.

8. System zum Erfassen von Nutzeridentitätsdaten für ein Identitätskonto an einem Point-of-Sale, mit einer Servereinrichtung (10) eines Identitätsdienstleisters und einem Terminal (4) mit einem Dokumentenlesegerät (5) an einem Point-of-Sale (1), wobei das System eingerichtet ist, ein Verfahren mit den folgenden Schritten auszuführen:
- Erstellen (20) eines Identitätskontos für eine Person, das für eine online-Identitätsprüfung nutzbar ist, in der Servereinrichtung (10) des Identitätsdienstleisters;
- Bereitstellen (22) einer Kennung für das erstellte Identitätskonto, wobei die Kennung der Person bereitgestellt wird, welcher das Identitätskonto zugeordnet ist und wobei die Kennung für das Identitätskonto als eine Kennung aus der folgenden Gruppe bereitgestellt wird: Strichcode und alphanumerischer Code;
wobei das System weiter eingerichtet ist, nach dem Erstellen (20) des Identitätskontos und dem Bereitstellen (22) der Kennung, die folgenden weiteren Schritte auszuführen:
- Ausbilden (24) einer Datenkommunikationsverbindung (11) zwischen einem Chip (6) eines persönlichen Identitätsdokuments (7), welches der Person zugeordnet ist und in einem Speicher des Chips (6) persönliche Daten der Person aufweist, und dem Dokumentenlesegerät (5) des Terminals (4) am Point-of-Sale (1);
- Erfassen (25) eines Zugangscodes (8), der auf dem persönlichen Identitätsdokument (7) aufgedruckt ist, im Dokumentenlesegerät (5);
- Ausführen (26) eines passwortbasierten Authentisierungs- und Schlüsseleinigungsverfahrens für das persönliche Identitätsdokument (7) und das Dokumentenlesegerät (5);
- nach erfolgreichem Durchlaufen des Authentisierungs- und Schlüsseleinigungsverfahrens, Auslesen der persönlichen Daten mittels des Dokumentenlesegeräts (5) über die Datenkommunikationsverbindung (11);
- Erfassen (27) der bereitgestellten Kennung für das erstellte Identitätskonto in dem Terminal (4) am Point-of-Sale (1);
- Übermitteln (28) der ausgelesenen persönlichen Daten und der erfassten Kennung von dem Terminal (4) am Point-of-Sale (1) an die Servereinrichtung (10) des Identitätsdienstleisters;
- in der Servereinrichtung (10) des Identitätsdienstleisters, Prüfen der übermittelten Kennung; und
- wenn die in der Servereinrichtung (10) des Identitätsdienstleisters erhaltenen persönlichen Daten nach der Prüfung der übermittelten Kennung dem Identitätskonto der Person zugeordnet werden können, Speichern (29) einer elektronischen Zuordnung zwischen den persönlichen Daten und dem Identitätskonto in der Servereinrichtung (10) des Identitätsdienstleisters.

9. System nach Anspruch 8, **dadurch gekennzeichnet, dass** das Terminal (4) mit dem Dokumentenlesegerät (5) mit einem Point-of-Sale-Terminal (2) integriert ausgebildet ist.

## Claims

1. A method for acquiring user identity data for an identity account at a point of sale, wherein the method comprises the following steps:
- creation (20) of an identity account for an individual, which can be used for an online identity check, in a server set-up (10) of an identity service provider;
- provision (22) of a code for the identity account created, wherein the code of the individual is provided to whom the identity account is assigned, and wherein the code for the identity account is provided as a code from the following group: barcode and alphanumeric code;
wherein subsequent to the creation (20) of the identity account and the provision (22) of the code, the method comprises the following steps:
- formation (24) of a data communication link (11) between a chip (6) of a personal identity document (7), which is assigned to the individual and has personal data on the individual in a memory of the chip (6), and a document reader (5) of a terminal (4) at a point of sale (1);
- acquisition (25) of an access code (8), which is printed on the personal identity document (7), in the document reader (5);
- execution (26) of a password-based authentication and key agreement protocol for the personal identity document (7) and the document reader (5);
- after the authentication and key agreement protocol has been run through successfully, reading-out of the personal data by means of the document reader (5) via the data communication link (11);
- acquisition (27) of the code provided for the identity account created in the terminal (4) at the point-of-sale (1);
- transmitting (28) the read-out personal data and the acquired code from the terminal (4) at the point-of-sale (1) to the server set-up (10) of the identity service provider;
- in the server set-up (10) of the identity service provider, checking of the transmitted code; and
- if the personal data received in the server set-up (10) of the identity service provider can be assigned to the individual's identity account after the transmitted code has been checked, storage (29) of an electronic assignment between the personal data and the identity account in the server set-up (10) of the identity service provider.

2. The method according to claim 1, **characterized in that** during the creation (20) of the identity account in the server set-up (10) of the identity service provider, the identity account is assigned a first security level (21) and electronic information on the first security level is stored.

3. The method according to claim 2, **characterized in that** in response to the reception of the read-out personal data and the acquired code by the terminal (4) in the server set-up (10) of the identity service provider, a second security level (30) is assigned to the identity account, which is a higher security level than the first security level, and electronic information on the second security level is stored.

4. The method according to at least one of the preceding claims, **characterized in that** at the point of sale (1), the terminal (4) with the document reader (5) is integrated with a point-of-sale terminal (2).

5. The method according to at least one of the preceding claims, **characterized in that** a card reader is used as the document reader (5), with which the personal identity document (7) configured as an identity chip card is read out.

6. The method according to at least one of the preceding claims, **characterized in that** during the transmission (28) of the read-out personal data and the captured code from the terminal (4) to the server set-up (10) of the identity service provider, a data communications network is used, via which point-of-sale data is also transmitted.

7. The method according to at least one of the preceding claims, **characterized in that** the access code (8) printed on the personal identity document (7) is read in by means of an optical and/or an electronic reader.

8. A system for acquiring user identity data for an identity account at a point of sale, having a server set-up (10) of an identity service provider and a terminal (4) with a document reader (5) at a point of sale (1), wherein the system is set up to implement a method comprising the following steps:
- creation (20) of an identity account for an individual, which can be used for an online identity check, in the server set-up (10) of an identity service provider;
- provision (22) of a code for the identity account created, wherein the code of the individual is provided to whom the identity account is assigned, and wherein the code for the identity account is provided as a code from the following group: barcode and alphanumeric code;
wherein the system is further set up, subsequent to the creation (20) of the identity account and the provision (22) of the code, to execute the following further steps:
- formation (24) of a data communication link (11) between a chip (6) of a personal identity document (7), which is assigned to the individual and has personal data on the individual in a memory of the chip (6), and a document reader (5) of a terminal (4) at a point of sale (1);
- acquisition (25) of an access code (8), which is printed on the personal identity document (7), in the document reader (5);
- execution (26) of a password-based authentication and key agreement protocol for the personal identity document (7) and the document reader (5);
- after the authentication and key agreement protocol has been run through successfully, reading-out of personal data by means of the document reader (5) via the data communication link (11);
- acquisition (27) of the code provided for the identity account created in the terminal (4) at the point-of-sale (1);
- transmitting (28) of the read-out personal data and the acquired code from the terminal (4) at the point-of-sale (1) to the server set-up (10) of the identity service provider;
- in the server set-up (10) of the identity service provider, checking of the transmitted code; and
- if the personal data received in the server set-up (10) of the identity service provider can be assigned to the individual's identity account after the transmitted code has been checked, storage (29) of an electronic assignment between the personal data and the identity account in the server set-up (10) of the identity service provider.

9. The system according to claim 8, **characterized in that** the terminal (4) with the document reader (5) is integrated with a point-of-sale terminal (2).

## Revendications

1. Procédé de détection de données d'identité d'utilisateur pour un compte d'identité au niveau d'un point de vente, le procédé comprenant les étapes suivantes :
- créer (20) un compte d'identité pour une personne, qui peut être utilisé pour un contrôle d'identité en ligne, dans un dispositif de serveur (10) d'un fournisseur de services d'identité ;
- fournir (22) un identifiant pour le compte d'identité créé, l'identifiant étant fourni pour la personne à laquelle le compte d'identité est attribué et l'identifiant du compte d'identité étant fourni en tant qu'identifiant du groupe suivant : code à barres et code alphanumérique ;
dans lequel le procédé après création (20) du compte d'identité et fourniture (22) de l'identifiant, comprenant en outre les étapes suivantes :
- établir (24) une connexion de communication de données (11) entre une puce (6) d'un document d'identité personnel (7), qui est attribué à la personne et présente des données personnelles de la personne dans une mémoire de la puce (6), et un lecteur de document (5) d'un terminal (4) à un point de vente (1) ;
- détecter (25) un code d'accès (8), qui est imprimé sur le document d'identité personnel (7), dans le lecteur de document (5) ;
- exécuter (26) une procédure d'authentification basée sur un mot de passe et d'accord de clé pour le document d'identité personnel (7) et le lecteur de document (5) ;
- après achèvement réussi du processus d'authentification et d'accord de clé, lire des données personnelles au moyen du lecteur de document (5) via la connexion de communication de données (11) ;
- détecter (27) l'identifiant fourni pour le compte d'identité créé dans le terminal (4) du point de vente (1) ;
- transmettre (28) des données personnelles lues et l'identifiant détecté du terminal (4) du point de vente (1) au dispositif de serveur (10) du fournisseur de service d'identité ;
- dans le dispositif de serveur (10) du fournisseur de service d'identité, vérifier l'identifiant transmis ; et
- si les données personnelles reçues dans le dispositif de serveur (10) du fournisseur de service d'identité peuvent être attribuées au compte d'identité de la personne après vérification de l'identifiant transmis, mémoriser (29) une attribution électronique entre les données personnelles et le compte d'identité dans le dispositif de serveur (10) du fournisseur de service d'identité.

2. Procédé selon la revendication 1, **caractérisé en ce que** lors de la création (20) du compte d'identité dans le dispositif de serveur (10) du fournisseur de services d'identité, le compte d'identité se voit attribuer un premier niveau de sécurité (21) et des informations électroniques concernant le premier niveau de sécurité sont mémorisées.

3. Procédé selon la revendication 2, **caractérisé en ce qu'**en réponse à la réception des données personnelles lues et de l'identifiant enregistré du terminal (4) dans le dispositif de serveur (10) du fournisseur de services d'identité, le compte d'identité se voit attribuer un deuxième niveau de sécurité (30), qui est un niveau de sécurité supérieur au premier niveau de sécurité, et des informations électroniques concernant le second niveau de sécurité sont mémorisées.

4. Procédé selon au moins une des revendications précédentes, **caractérisé par le fait qu'**au niveau du point de vente (1) le terminal (4) avec le lecteur de document (5) est intégré à un terminal de point de vente (2).

5. Procédé selon au moins une des revendications précédentes, **caractérisé en ce qu'**un lecteur de carte est utilisé comme lecteur de document (5) avec lequel le document d'identité personnel (7) conçu comme une carte à puce d'identité est lu.

6. Procédé selon au moins une des revendications précédentes, **caractérisé en ce que** lors de la transmission (28) des données personnelles lues et de l'identifiant détecté du terminal (4) au dispositif de serveur (10) du fournisseur de services d'identité, un réseau de communication de données est utilisé, via lequel des données de point de vente sont également transmises.

7. Procédé selon au moins une des revendications précédentes, **caractérisé en ce que** le code d'accès (8) imprimé sur la pièce d'identité personnelle (7) est lu au moyen d'un dispositif de lecture optique et/ou électronique.

8. Système d'enregistrement de données d'identité d'utilisateur pour un compte d'identité au niveau d'un point de vente, comportant un dispositif de serveur (10) d'un fournisseur de services d'identité et un terminal (4) avec un lecteur de document (5) au niveau d'un point de vente (1), dans lequel le système est configuré pour effectuer une procédure avec les étapes suivantes :
- créer (20) un compte d'identité pour une personne, qui peut être utilisé pour un contrôle d'identité en ligne, dans un dispositif de serveur (10) d'un fournisseur de services d'identité ;
- fournir (22) un identifiant pour le compte d'identité créé, l'identifiant étant fourni pour la personne à laquelle le compte d'identité est attribué et l'identifiant du compte d'identité étant fourni en tant qu'identifiant du groupe suivant : code à barres et code alphanumérique ;
dans lequel le système est en outre conçu, après la création (20) du compte d'identité et la fourniture (22) de l'identifiant, pour exécuter en outre les étapes suivantes :
- établir (24) une connexion de communication de données (11) entre une puce (6) d'un document d'identité personnel (7), qui est attribué à la personne et présente des données personnelles de la personne dans une mémoire de la puce (6), et un lecteur de document (5) d'un terminal (4) à un point de vente (1) ;
- détecter (25) un code d'accès (8), qui est imprimé sur le document d'identité personnel (7), dans le lecteur de document (5) ;
- exécuter (26) une procédure d'authentification basée sur un mot de passe et d'accord de clé pour le document d'identité personnel (7) et le lecteur de document (5) ;
- après achèvement réussi du processus d'authentification et d'accord de clé, lire des données personnelles au moyen du lecteur de document (5) via la connexion de communication de données (11) ;
- détecter (27) l'identifiant fourni pour le compte d'identité créé dans le terminal (4) du point de vente (1) ;
- transmettre (28) des données personnelles lues et l'identifiant détecté du terminal (4) du point de vente (1) au dispositif de serveur (10) du fournisseur de service d'identité ;
- dans le dispositif de serveur (10) du fournisseur de service d'identité, vérifier l'identifiant transmis ; et
- si les données personnelles reçues dans le dispositif de serveur (10) du fournisseur de service d'identité peuvent être attribuées au compte d'identité de la personne après vérification de l'identifiant transmis, mémoriser (29) une attribution électronique entre les données personnelles et le compte d'identité dans le dispositif de serveur (10) du fournisseur de service d'identité.

9. Système selon la revendication 8, **caractérisé en ce que** le terminal (4) est intégré avec le lecteur de documents (5) dans un terminal de point de vente (2).
